# EUROPEAN PATENT APPLICATION

(11) **EP 1 906 334 A2**
(43) Date of publication of application: **02.04.2008**
(21) Application number: 07113874.7
(22) Date of filing: 06.08.2007
(51) Int. Cl.: G06F 21/02

(54) **Information leak-preventing apparatus and information leak-preventing method**

(30) Priority: 28.09.2006 JP 2006266079
(71) Applicant: Fujitsu Ltd., Kawasaki-shi, Kanagawa 211-8588 (JP)
(72) Inventor: Kadowaki, Yoshinori, c/oYamagata Fujitsu Limited, Higashine-shi, Yamagata 999-3701 (JP); Tanaka, Shigeyoshi, Yamagata Fujitsu Limited, Higashine-shi, Yamagata 999-3701 (JP)
(74) Representative: Cooper-Rolfe, Elizabeth Louise

(57) **Abstract**

A password creating unit acquires medium information such as a serial number from an HDD, and creates a password according to an algorithm previously stored in an algorithm storing unit. A lock processing unit performs the process of lock and unlock of the HDD by using the created password.

## Description

### BACKGROUND OF THE INVENTION

### 1. Field of the Invention

The present invention relates to a technology for preventing unauthorized reading of information from a storage medium by a third person.

### 2. Description of the Related Art

In recent years, it is often the case that confidential industrial or personal information is stored in various storage media, such as a hard disk drive (HDD). Therefore, it has become inevitable to prevent leakage of information from the storage media. There is a real need for an arrangement, whereby a third person is unable to read data stored in a storage medium, when the storage medium is disposed or is sent for repair.

Initialization (formatting) or overwriting meaningless data is effective in making data, stored in the storage medium, unreadable. However, time required for formatting or overwriting varies significantly depending on volume or on writing speed of the storage medium. For example, in magnetic devices such as HDD, time required for overall overwriting is about 1 hr/100 GB.

Furthermore, ever increasing capacity of the storage medium is likely to increase the time required for formatting and overwriting.

Moreover, formatting and overwriting prevents an authorized user from reading an original data.

A technology disclosed in Japanese Patent Application Laid-Open No. 2006-59025 uses a password for locking the storage medium (for example, see ANSI T13 Technical Committee Information technology "T13/1699-D" At Attachment 8-ATA/ATAPI Command Set (ATA8-ACS)), for reducing time required for making the data, in the storage medium, unreadable and for restoring data to a state in which the information can be read again.

However, in the conventional technology, one arbitrary password is predetermined for locking the storage medium. One password is advantageous in that it is possible to manage various storage media with one password, which in turn makes the operation for locking and unlocking easy. However, the conventional technology has a problem that once the information about the password leaks to a third person, the third person can maliciously lock or unlock the storage media by using the password.

In practical use, for example, the HDD is connected to a leak preventing device via an external connector and a cable, and the password is transmitted through the cable. Therefore, if the HDD along with the leak preventing device fall in the hands of the third person, it is easy for the third person to know the password by prying into communication through a bus monitor. Consequently, it is possible to easily unlock the storage medium on a personal computer, which makes the confidentiality of the data unreliable.

### SUMMARY OF THE INVENTION

It is desirable to at least partially solve the problems in the conventional technology.

According to an aspect of the present invention, an information leak-preventing apparatus that prevents leakage of information from a storage medium includes an storing unit that stores therein an algorithm; a reading unit that reads medium information related to the storage medium from the storage medium; a creating unit that creates a password by using the medium information and the algorithm; and a controlling unit that controls reading of information from the storage medium based on created password.

According to another aspect of the present invention, a method for preventing leakage of information from a storage medium includes reading medium information related to the storage medium from the storage medium; creating a password by using an algorithm and the medium information; and controlling reading of information from the storage medium based on created password.

The above and other features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a schematic block diagram for explaining an outline and configuration of an information leak-preventing apparatus according to an embodiment of the present invention;
Fig. 2 is an exterior view of the information leak-preventing apparatus;
Fig. 3 is a schematic for explaining a lock process and an unlock process performed by the information leak-preventing apparatus;
Fig. 4 is a flowchart for explaining a processing operation performed by the information leak-preventing apparatus.

### DETAILED DESCRIPTION OF THE PREFERRED EMBODIMENTS

Exemplary embodiments of the present invention are explained in detail with reference to the accompanying drawings.

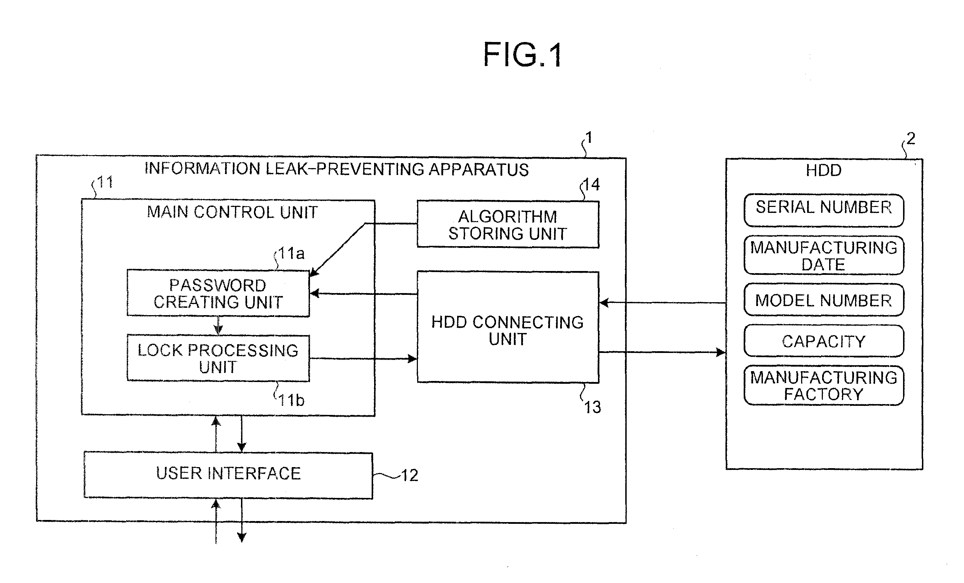

Fig. 1 is a schematic block diagram for explaining an outline and configuration of a configuration of an information leak preventing apparatus 1 according to an embodiment of the present invention. As shown in the figure, the information leak-preventing apparatus 1 is connected to a Hard Disk Drive (HDD) 2. Furthermore, the information leak-preventing apparatus 1 includes a main control unit 11, a user interface 12, an HDD connecting unit 13, and an algorithm storing unit 14.

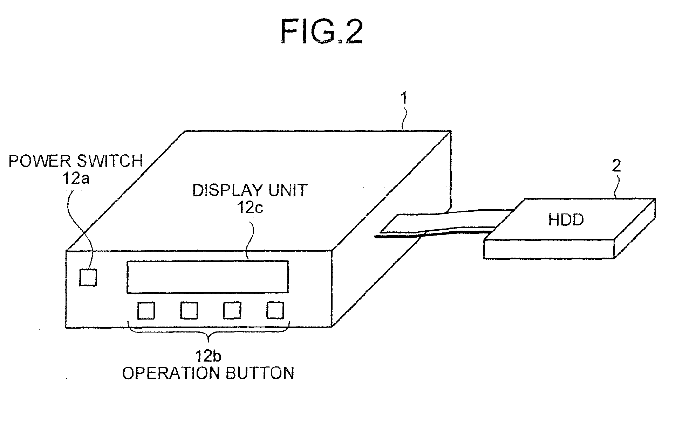

The user interface 12 is an input/output processing unit for input and output performed by a user, which is realized through, for example, a power switch 12a, operation buttons 12b, a display unit 12c, and the like, as shown in Fig. 2.

The HDD connecting unit 13 is an input/output unit that performs data transmission and reception to and from the HDD 2, and is connected physically to the HDD 2 with, for example, a flat cable.

The algorithm storing unit 14 stores therein an algorithm for creating a password to be used for locking the HDD 2. It is preferable that a one-way function (for example, SHA-1, MD5, RSA, elliptic curve function, and the like) is used for the algorithm.

The main control unit 11 is a controlling unit that controls the entire information leak-preventing apparatus 1, and includes a password creating unit 11a and a lock processing unit 11b. The password creating unit 11a performs a process of creating the password using information related to the HDD 2 and the algorithm stored in the algorithm storing unit 14.

The lock processing unit 11b uses the password created by the password creating unit 11a to perform the process of locking that prevents reading of data from the HDD 2.

The HDD 2 stores therein information such as a unique identification number (for example, serial number), model number, capacity, manufacturing information (date of manufacturing, manufacturing factory, and the like). It is possible to set up a different password for each HDD by reading medium information related to the HDD 2 and creating a password according to a predetermined algorithm.

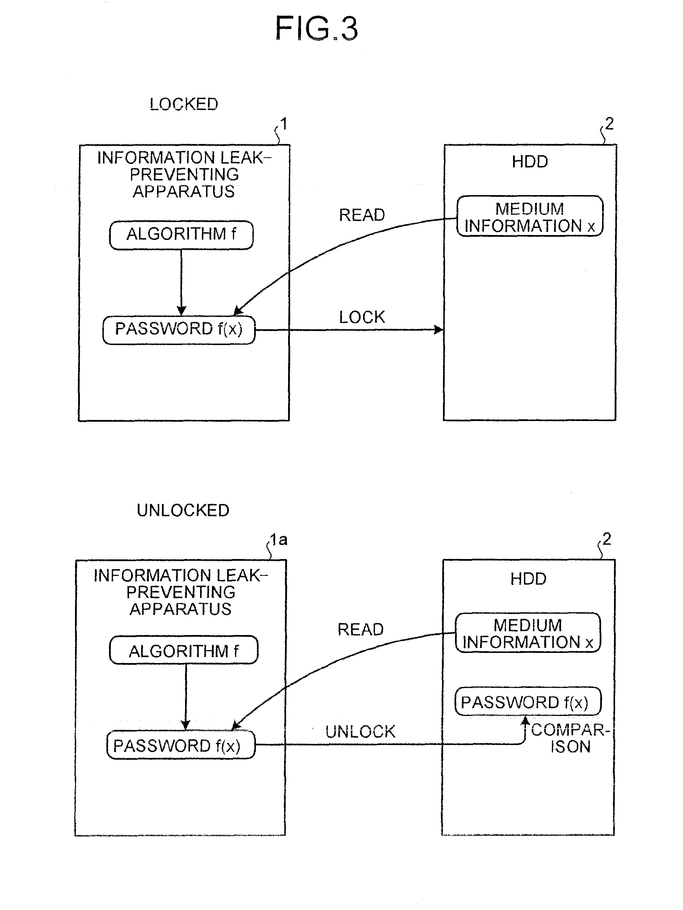

As shown in Fig. 3, during a lock process, the information leak-preventing apparatus 1 reads medium information x from the HDD 2, creates a password f(x) according to an algorithm f, and locks the HDD 2. The HDD 2 stores therein the password f(x), and after that, rejects reading of (read command) data.

During an unlock process, an information leak-preventing apparatus la, which is in locked state, reads the medium information x from the HDD 2, creates the password f(x) according to the algorithm f, and unlocks the HDD 2. At this time, the password used for locking and that for unlocking is compared in the HDD 2. If the two passwords match, the lock is released, and only then the data can be read from the HDD 2.

Thus, because passwords are created every time locking or unlocking is performed by using the medium information in the HDD 2, there is no need to store the password in the information leak-preventing apparatus. Therefore, even if the information leak-preventing apparatus is obtained and the information stored therein is analyzed by a third person, the third person cannot acquire the password. Furthermore, as compared to the configuration that includes storing different passwords for each HDD, it is possible to largely reduce the storage area necessary in the information leak-preventing apparatus.

Moreover, because a different password is used for each HDD, for example, even if the third person obtains the information leak-preventing apparatus along with the HDD 2, and acquires a password from a bus monitor in an unauthorized manner, the third person can unlock only the HDD 2, and even if other HDDs is locked by using the same information leak-preventing apparatus, it is possible to prevent unauthorized unlocking of the other HDDs.

In anticipation of the possibility of an algorithm being analyzed, it is desirable to make the provision for alteration of the algorithm, which has been stored in the algorithm storing unit 14.

The medium information that is to be used for creating the password can be selected randomly from the variety of above-mentioned information. Moreover, if a plurality of pieces of information is selected, a random combination of the selected information can be used to create an algorithm that is difficult to be analyzed.

In such a case, at the time of unlock, because the medium information used for creating the password is unknown, the user needs to try unlocking by using a plurality of password candidates. In other words, in exchange for the improvement in the confidentiality, unlocking process becomes complicated.

However, when the storage medium is to be disposed, because release of lock is not a precondition, and lock needs to be released only when it is necessary, processing load for the unlocking process is less.

Similarly, when the storage medium is taken for repairing, generally, the user is provided with an alternative storage medium, and the data is transferred to the storage medium. Most of the time, because the storage medium that is to be repaired is taken out, an increase in processing load is negligible as in the case of disposing of the storage medium.

It is that the information leak-preventing apparatus 1 used for locking and the information leak-preventing apparatus 1a used for unlocking are different. Moreover, it is preferable that the information leak-preventing apparatus 1 used for locking includes only lock function, i.e., does not include unlock function. The information leak-preventing apparatus used for unlocking can include lock function; because, it is a precondition that it is under a strict management. However, it is preferable that the information leak-preventing apparatus used for unlocking includes only unlocking function.

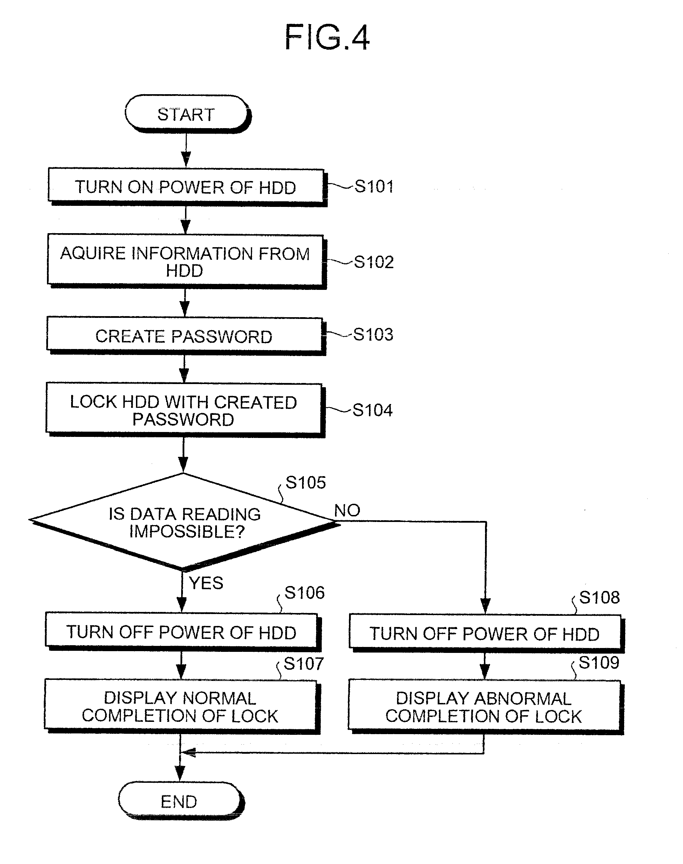

Detailed explanation regarding process in the information leak-preventing apparatus 1 is provided with reference to a flowchart shown in Fig. 4. As shown in the figure, the information leak-preventing apparatus 1 turns on the power of the HDD 2 (step S101), and then acquires medium information from the HDD 2 (step S102).

The information leak-preventing apparatus 1 uses the acquired medium information and the algorithm stored in the algorithm storing unit 14 to create a password (step S103) and locks the HDD 2 (step S104) by using the created password.

The information leak-preventing apparatus 1 issues a read command to the HDD 2 and confirms whether data reading is impossible (step S105). If the data reading is impossible (Yes at step S105), then, the information leak-preventing apparatus 1 turns off the power of the HDD 2 (step S106), and displays a message indicating normal completion of lock (step S107). Thus, the process is completed.

If reading of the data is not impossible (No at step S105), the information leak-preventing apparatus 1 turns off the power of the HDD 2 (step S108), and displays a message indicating abnormal completion of lock, in other words, displays a message that the HDD 2 could not be locked (step S109). Thus, the process is completed.

While the lock process is explained above, the unlock process is performed in the same manner as the lock process and explanation thereof is omitted.

As mentioned above, the information leak-preventing apparatus according to the embodiment acquires the medium information from the HDD 2 and creates the password according to the stored algorithm. The process of lock and unlock of the HDD 2 is performed using the created password. Thus, confidentiality is improved against the unauthorized reading of the information by the third person, and the information is restored to a state in which the information can be read again when necessary.

While the present invention has been described with reference to a few specific embodiments, the description is illustrative of the invention and is not to be construed as the invention. The present invention can be arbitrarily changed or modified. For example, any character string or date can be used to create a password.

According to one aspect of the present invention, it is possible to improve confidentiality against unauthorized reading by a third person, and to restore the information to a state in which the information can be read again when necessary.

Moreover, it is possible to improve confidentiality against unauthorized reading by a third person, and to restore the information to a state in which the information can be read again when necessary.

Furthermore, it is possible to improve confidentiality against unauthorized reading by a third person.

Moreover, it is possible to improve confidentiality against unauthorized reading by a third person.

Furthermore, it is easy to create a robust password and prevent unauthorized reading of the information from the storage medium.

Moreover, it is possible to improve confidentiality against unauthorized reading by a third person, and to restore the information to a state in which the information can be read again when necessary.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. An information leak-preventing apparatus that prevents leakage of information from a storage medium, the information leak-preventing apparatus comprising:
an storing unit that stores therein an algorithm;
a reading unit that reads medium information related to the storage medium from the storage medium;
a creating unit that creates a password by using the medium information and the algorithm; and
a controlling unit that controls reading of information from the storage medium based on created password.

2. The information leak-preventing apparatus according to claim 1, further comprising an input unit configured to receive input of a user password, wherein
the controlling unit that prevents reading of information from the storage medium or cancels prevention of reading of information from the storage medium when the user password matches with the created password.

3. The information leak-preventing apparatus according to claim 1 or 2, wherein the medium information includes at least one of an identification number unique to the storage medium, a model number of the storage medium, storage capacity of the storage medium, and manufacturing information about the storage medium.

4. The information leak-preventing apparatus according to any one of the preceding claims, wherein the algorithm stored in the storing unit is rewritable.

5. The information leak-preventing apparatus according to any one of the preceding claims, wherein
the reading unit reads a plurality of pieces of the medium information from the storage medium, and
the creating unit randomly selects a part of the medium information read by the reading unit that is to be used for creating the password.

6. The information leak-preventing apparatus according to any one of the preceding claims, wherein a one-way function is used for the algorithm.

7. A method for preventing leakage of information from a storage medium, the method comprising:
reading medium information, related to the storage medium from the storage medium;
creating a password by using an algorithm and the medium information; and
controlling reading of information from the storage medium based on created password.

8. The method according to claim 7, further comprising receiving input of a user password, wherein
controlling includes preventing reading of information from the storage medium or canceling prevention of reading of information from the storage medium when the user password matches with the created password.

9. The method according to claim 7 or 8, wherein the medium information includes at least one of an identification number unique to the storage medium, a model number of the storage medium, storage capacity of the storage medium, and manufacturing information about the storage medium.

10. The method according to any one of claims 7 to 9, wherein the algorithm is rewritable.

11. The method according to any one of claims 7 to 10, wherein
the reading includes reading a plurality of pieces of the medium information from the storage medium, and
the creating includes randomly selecting a part of the medium information read at the reading that is to be used for creating the password.

12. The method according to any one of claims 7 to 11, wherein the creating includes creating the algorithm based on a one-way function.
